Europäisches Patentamt

European Patent Office

Office européen des brevets

(11) Publication number: **0 461 719 A2**

# EUROPEAN PATENT APPLICATION

(21) Application number: **91201425.5**

(22) Date of filing: **08.06.91**

(51) Int. Cl.⁵: **G02F 1/35, G02F 1/295**

(30) Priority: **13.06.90 IT 2063790**

(43) Date of publication of application:
**18.12.91 Bulletin 91/51**

(84) Designated Contracting States:
**BE CH DE ES FR GB LI NL SE**

(71) Applicant: **TELETTRA Telefonia Elettronica e Radio S.p.A.**
**Via Cornalia 19**
**I-20100 Milano(IT)**

Applicant: **IRT S.p.A.**
**Via Della Elettricità, 5**
**I-30175 Venezia-Marghera(IT)**

(72) Inventor: **Someda, Carlo Giacomo, Prof.**
**Via Facciolati, 25**
**I-35100 Padova(IT)**

(74) Representative: **Incollingo, Italo**
**Piazzale Lavater, 3**
**I-20129 Milano(IT)**

(54) **System and device for the optical control of the coupling/uncoupling between dielectric wave guides.**

(57) The invention refers to a system for the optical control of the coupling or uncoupling between two dielectric wave guides that have any form, are substantially parallel with one another, and in which a material showing an optical non-linearity is embodied at least in a part of the region interposed between the guides.

EP 0 461 719 A2

The present invention refers to a system for the control of the coupling or uncoupling between two dielectric wave guides having any form and parallel with one another, acting only by optical way on the distribution of the refractive index in the region interposed between the same guides, by using an optical control beam and exploiting a non-linear effect.

Further the invention concerns the photonic commutation devices based on the implementation of this system as well as the (analogue, numerical, logic) circuits that embody these devices as a block necessary for their working.

STATEMENT OF THE PRIOR ART

A preceding patent (Italian patent no. 1191711) of the Applicant has disclosed a system for the coupling/uncoupling of wave guides, substantially based on a suitable distribution of the refractive index in the region interposed between these guides. Generally speaking the invention disclosed in the above mentioned patent has shown that two dielectric guides located parallel and near can be uncoupled bringing the intermediate region in anti-resonance conditions.

Further said patent has described and claimed some possibilities of controlling the value of the coupling between two guides by means of electro-optical means using electro-optical materials (lithium niobate, semiconductors, etc.) and the application of proper electrodes. Applying suitable tensions to these electrodes it is possible to bring the two guides in reciprocal coupling/uncoupling conditions, forming so an optical commutation device controlled by electric means.

During the continuous searches made in this important field, the Applicant has obtained various improvements, variants, extensions, etc. that allow to get a similar control of coupling through a non-linear optical effect.

According to a first feature of the invention the refractive index in the intermediate region is changed according to whether a control optical beam is present or not present within this region.

According to another particularly advantageous feature of the invention related to the external behaviour of the system, it is no more necessary to get the perfect "distributed" uncoupling condition described in said preceding patent, but it is sufficient to get a relatively limited modification of the coupling coefficient between the two guides.

Therefore the object of the present invention includes a system in which the distribution of the refractive index, at least in a part of the region interposed between the guides, is changed by the presence or absence of a control optical beam taking advantage at the fact that the material, in said region or in a part thereof, has an optical non-linearity, viz. it has a refractive index that depends on the intensity of the optical radiation crossing it; the changing of the index caused by the variations of the intensity of the control optical beam is made in a such a measure to take the two guides from a coupling to an uncoupling condition or viceversa.

According to a relevant feature of the invention, the desired behaviour can be advantageously obtained by exploiting one of the following possible action combinations:

- coupling in presence/in absence of the control beam;
- exploitation of a positive non-linearity (refractive index increasing when the beam intensity increases)/ of a negative non-linearity.

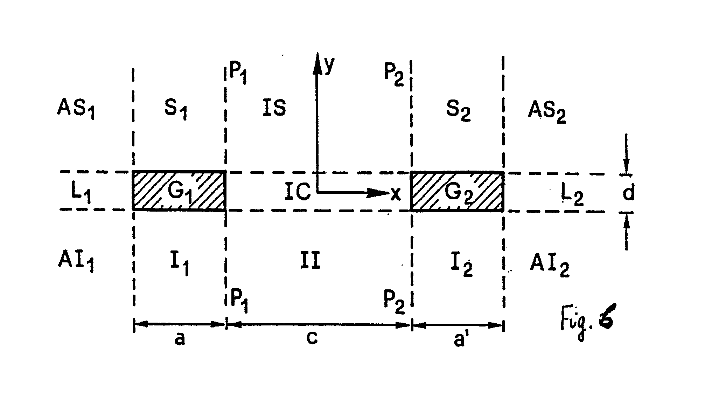

Obviously the "architecture" of the device (control beam in the region IC or in the region II or IS of the preceding patent, as indicated in annexed Figure 6) depends on the selection among the above mentioned possibilities.

It is advisable to observe that the use of non-linear optical effects for controlling the commutation between two parallel guides acting on its coupling appears to be already proposed implicitly in the literature, however the difference is that all the devices proposed and experienced until to-day had the control optical beam that was propagated in the inside of one of two guides, and this beam often coincided with the same beam to be commutated ("self routing"). On the contrary the more important characteristic and the new feature of the present device is that, according to the present invention, the control beam is located at the ouside of guides.

The main advantages of the new solution are the following ones:

- the materials with high non-linearities have often high attenuations, and this characteristic is in contrast with their crossing by the signal to be switched;
- different wave lengths can be used for the control beam and the commutated beam;
- it is possible to make commutation matrixes with more than two guides parallel with one another, retaining a total working independence between the various devices placed side by side in the same matrix;
- the idea can be also extended to the case in which the control beam is not propagated in the same direction of the coupled/uncoupled guides, but also in a different direction, in particular into a direction that is not parallel to the plane defined by the axes of the two guides; this allows the conception of a tridimensional architecture of the commutation node.

A further advantage of the system according to the present invention is that it provides also a solution or measure that allows to overcome a problem appearing during the embodiment of the invention forming the object of the preceding patent. In fact this solution is particularly suitable to be implemented in the completely optical version of the uncoupling system, that is in the case of a "photonic switch".

Studies and tests (in particular computer simulations) made on the device that is the object of the preceding patent no. 1191711 after the filing thereof, have indeed shown that the uncoupling between the two parallel guides can be more difficult to be obtained than the preceding studies, made on this subject before the filing of the first patent, had shown.

It particular it was noticed that, if one wants to keep simple geometrical structures and small differences of the refractive index between the various regions (as it was indicated, only as an example, in the old patent, and as it is suitable to make for avoiding technological complexities), a reduction of the refractive index in some regions external to the two guides in some cases (e.g. when the guides are installed very near with one another) can only lead to a partial uncoupling between the same guides, i.e. to a reduction, but not to an annulment of the power per length unit transferred from one guide to the other guide, at a parity of all other operative conditions.

When the invention according to the preceding patent is used as permanent uncoupling system between two near guides, it is necessary to overcome the above mentioned difficulties, even at technological complexities expenses. But when this device is used as commutation device, in particular for photonic switching, the problem can be now solved as described in the following.

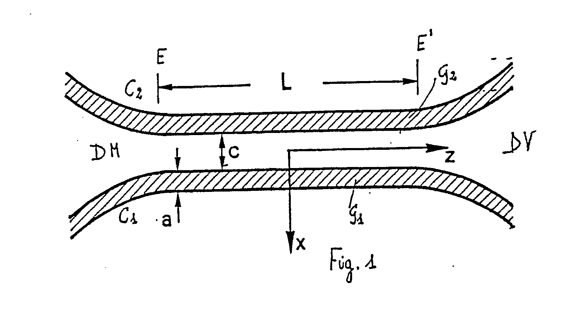

For fixing the ideas, reference is made to the Figure 1 of the preceding patent, in which the guides G1 and G2 are coupled on a section L with ends E, E', C1 and C2 are curvilinear sections, DM is the section uncoupled upstream, DV is the section uncoupled downstream, "c" is the distance between the guides G1 and G2 and "a" is the thickness of each guide.

As it is known, considering said wave guides of the preceding patent coupled with one another along the section of length L, the part of the guided power that is transferred from one guide to the other one along said section, keeping constant the other conditions, depends on the product $\Delta\beta$ L, where $\Delta\beta$ indicates the difference between the phase constants of the two modes (sometimes termed "supermodes") of the structure, respectively with even or odd symmetry with respect to the center line plane between the two guides. Further it is known that $\Delta\beta$ increases when the cou-

pling coefficient (or coupling per length unit) between the two guides, increases. As said above, the coupling coefficient depends greatly on the distribution of refractive index in the intermediate region between the two guides in the structure forming the object of the preceding patent and re-used herein.

Finally it is known that the power transfer from a guide (that for better clarity can be supposed the sole excited at the inlet of device) to the other guide is at maximum value (in ideal conditions it reaches 100%), if $\Delta\beta$ L, expressed in radiants, is equal to an odd multiple of $\pi/2$ (greek pi divided by 2) ("cross" status, in the following also termed as commutated status), while on the contrary it is at minimum value (ideally, zero), when $\Delta\beta$ L is equal to an even multiple of $\pi/2$ (greek pi divided by 2) ("bar" status, in the following also termed as non-commutated or unswitched status).

In these cases the device that is the object of the present invention amounts to a photonic commutation system, obtained by means of a change of $\Delta\beta$ equal to $\pi/2$ divided by L ( = device length), obtained modifying the distribution of the refractive index in the intermediate region between the two guides through an optical non-linearity and a control optical beam that is propagated therein.

It must be noticed that in many of the devices and systems of photonic commutation proposed and studied up to now the passage from the "cross" status to the "bar" status is obtained by changing the coupling coefficient between the two guides.

The inventive feature of the present device resides in that this result is again obtained by utilizing a control be at the outside rather than in the inside of the guides.

To the main advantages of the present invention already indicated above, it is to be added the further advantage deriving from the fact that the power (or the energy) necessary to control the switch or commutator can be very small (in theory arbitrarily little), becouse the required change of $\Delta\beta$ for making the commutation is inversely proportional to the device length, L. This is not true for the greather part of photonic commutation devices proposed until to-day, in which the variation of the coupling between the two guides is obtained by "detuning"), i.e. by breaking the structure symmetry with respect to the center line plane, and not by the variation of the beat length (1/$\Delta\beta$) between the even and odd supermodes, whereby the working or operation of said devices is subordinated to the condition that the optical beam to be commutated reaches a precise threshold power (or energy).

The different characteristics and advantages of the invention shall appear better from the following description of the embodiments shown in the accompanying drawings, in which:

Figure 1 represents the scheme of a photonic switch;

Figure 3 represents the scheme of an amplifier, respectively a regenerator of optical pulses;

Figure 4 represents the scheme of a logical AND or NAND network, and

Figure 5 represents the scheme of an intermediate storage optical element or the scheme of a regenerative optical oscillator.

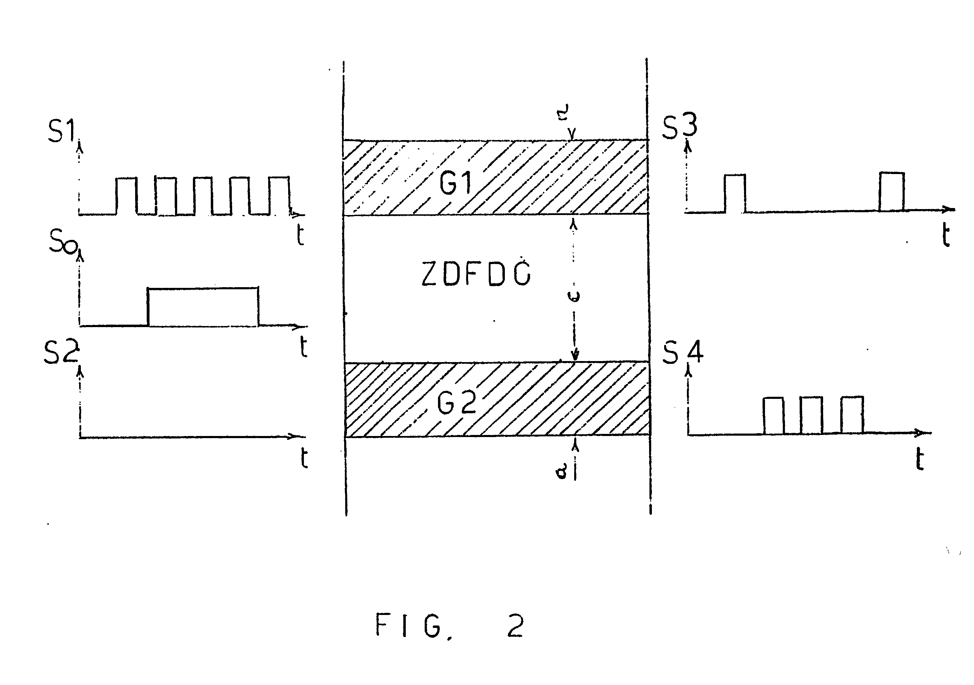

The Figure 2 represents (very schematically for sole illustrative purpose) the application of the principle according to the present invention to a photonic switch SwF: a zone of the control beam ZDFDC (e.g. with dimension c) is provided between the two parallel wave guides G1 and G2 (e.g. with thickness a). S1 is the input signal in G1, S2 is the input signal in G2 and So is the control signal in the zone ZDFDC, while S3 is the output signal from G1, S4 being the output signal from G2. All of these signals are represented in function of time, t.

The opposite case is possible (exchange of values between S3 and S4). In this application, as well as in the following ones, the response speed of the device is limited by the sole precision with which the propagation speeds of the commutated and control signals can be made equal with one another.

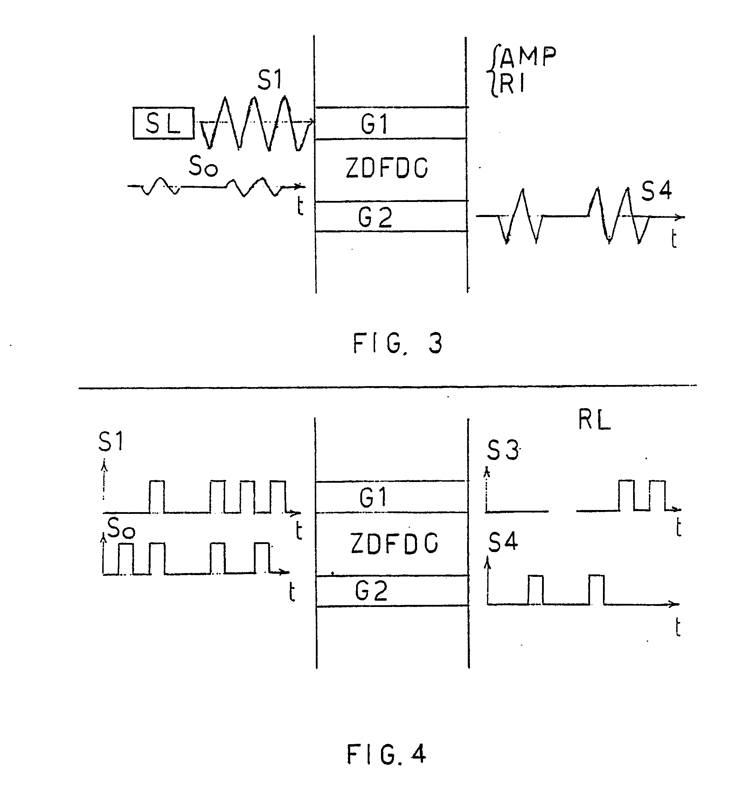

Figure 3 represents the application to an amplifier ("optical transistor") AMP, respectively to a regenerator of optical pulses RI.

The input of the guide G1 is coupled permanently with a laser source SL (with the same wave length or with another wave length, in continuous wave). S1 is applied to the input of G1 and So to ZDFDC; the signal S4 is obtained at the output of G2.

The pulse regenerator is obtained for a highly non-linear version of the above mentioned amplifier.

Figure 4 represents (always in schematic form with the aim of simplifying the drawings) the embodiment of a logic RL, AND or NAND network.

The input signals S1 to G1, the signal So to ZDFDC and output signals S3 from G3 or S4 (AND output) from G2 can assume the forms also represented schematically and with sole illustrative purposes.

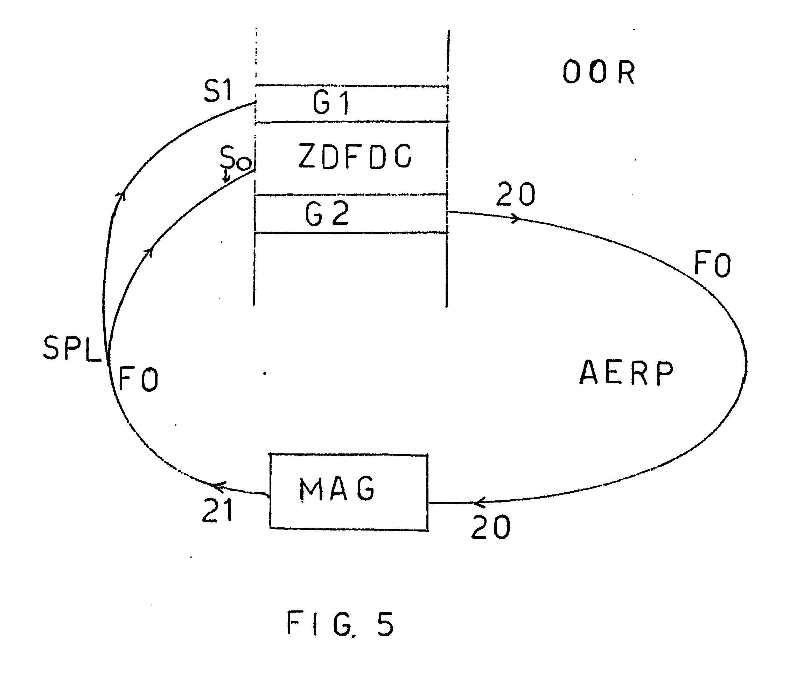

Figure 5 represents the embodiment of a regenerative optical oscillator OOR (pulsed laser) emitting ultrashort pulses, obtained associating the device formed by G1, ZDFDC and G2 to an external positive feedback ring AERP, obtained with the closed loop guide (e.g. an optical fibre FO represented symbolically by a line) and an active device or means MAG suitable for amplifying the interested optical frequencies. The signal 20 at output from G2 is sent to the first part of the ring MAG, whose output signal 21 is distributed in a splitter SPL, that generates the input signal S1 to G1 and the input signal So to ZFDC. Even if in the literature devices may be described having a certain resemblance to the above described devices (yet they have not caused practical embodiments) with respect to a microwave-optical part interaction (see e.g. Marcatili, IEEE J.Q.E. Vol. QE-21 pages 307-314, April 1985) devices of this type made in a completely optical version have, up to now, and at the best of our knowledge, not yet brought about. If the gain level caused by MAG in optical loop is suitable for compensating more or less exactly the losses of the same loop, it is obtained an optical device of intermediate storage.

## Claims

1. A system for the control of the coupling / uncoupling between two dielectric wave guides that have any section form, are parallel with one another and have a region or zone interposed therebetween, characterized in that the refractive index at least in a part of said region, interposed between the optical wave guides to be coupled or uncoupled, is non-linear and is changed by means of an optical beam.

2. A system according to claim 1, characterized in that said part includes a means whose refractive index is varied by the intensity of the control optical beam that is propagated outside the control guides.

3. A system according to claim 1 and/or 2, characterized in that, in the presence or absence of said control optical beam, the region interposed between the guides including said part, is substantially set in antiresonance conditions.

4. A system according to claims 1 and/or 2, characterized in that there is a difference in the coupling coefficient between the two guides when the status of the system is in presence of the control beam and the status is in absence of the control beam and in that said difference in such that in presence of the control beam the system is in the commutated ("cross") status and in its absence the system is in the non-commutated ("bar") status or viceversa.

5. A system according to at last one of claims 1-4, characterized in that the location of the propagation region of the control optical beam is selected in function of the combination of the used materials, that can have refractive indexes increasing or decreasing with the increasing of the power of said control beam and in function of the system status (commutated or not commutated) that is desired to get in absence of the control beam.

6. A system substantially according to what described and represented.

7. Devices for the embodiment of the system according to the preceding claims, characterized in that they include N guides (with N greather or equal to 2) parallel with one another and/or installed in cascade, and in that they couple, respectively decouple two of said guides disposed in any manner.

8. Devices substantially according to what described and represented.

9. Applications of the system and/or devices according to preceding claims in: - optical (de) multiplexers - optical regenerative oscillators - logic circuits - automatic level control circuits - intermediate storage devices and the like.

Fig. 1

EP 0 461 719 A2

S1

S0

S2

G1

ZDFDC

G2

S3

S4

FIG. 2

FIG. 3

FIG. 4

FIG. 5

Fig. 6